# EUROPÄISCHE PATENTSCHRIFT

(11) **EP 0 628 438 B1**
(45) Veröffentlichungstag und Bekanntmachung des Hinweises auf die Patenterteilung: **02.10.1996**
(21) Anmeldenummer: 94106873.6
(22) Anmeldetag: 03.05.1994
(51) Int. Cl.: B60J 7/12

(54) **Einrichtung zur Befestigung eines unteren Randbereiches eines Verdeckbezuges**
Fixation method for the bottom edge of a soft top
Méthode pour la fixation du bord inférieur d'une capote

(30) Priorität: 11.06.1993 DE 4319484
(43) Veröffentlichungstag der Anmeldung: 14.12.1994
(73) Patentinhaber: Dr.Ing.h.c. F. Porsche Aktiengesellschaft, D-70435 Stuttgart (DE)
(72) Erfinder: Just, Jan, D-71229 Leonberg (DE)

(56) Entgegenhaltungen:
- EP-A- 0 509 326
- DE-C- 3 207 732
- US-A- 3 090 646

## Beschreibung

Die Erfindung betrifft eine Einrichtung zur Befestigung eines unteren Randbereiches eines Verdeckbezuges gemäß dem Oberbegriff des Patentanspruches 1.

Bei einer bekannten Anordnung der eingangs genannten Gattung (DE 32 07 732 C 1) ist am freien Ende des Randbereiches des Verdeckbezuges ein Haltestreifen aus Verdeckstoff vorgesehen, der zusammen mit einem Steg eines Dichtkörpers zwischen der Innenseite des Schenkels der Schiene und einer Profilleiste klemmend gehalten ist.
Diese Anordnung weist eine gute Funktion auf. Nachteilig ist jedoch, daß zur Befestigung eine Vielzahl von Bauteilen erforderlich ist (Gewindezapfen an der Schiene, Muttern, Profilleiste), wodurch hohe Herstell- und Montagekosten entstehen.

Aufgabe der Erfindung ist es, eine Einrichtung zur Befestigung eines unteren Randbereiches eines Verdeckbezuges der eingangs genannten Gattung derart weiterzubilden, daß bei guter Haltefunktion und einfacher Montage die Herstell-und Montagekosten wesentlich reduziert werden.

Erfindungsgemäß ist diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die durch ein Zugband und eine aufgesteckte Klemmleiste gebildete Befestigung bei einfacher Montage und guter Haltefunktion kostengünstig herstellbar ist. Das Zugband wird um den parallel zum unteren Randbereich des Verdeckbezuges ausgerichteten Schenkel beidseitig herumgeführt und über dieses Zugband wird eine Klemmleiste aufgeschoben.

Bei einer besonders vorteilhaften Ausbildung ist ein Dichtkörper einstückig mit der Klemmleiste ausgebildet.
Die an der Klemmleiste örtlich vorgesehenen Federzungen wirken verkrallend mit dem Zugband bzw. dem ersten Schenkel der Schiene zusammen und gewährleisten eine sichere Befestigung des Verdeckbezuges an der Schiene. Durch die an den Klemmleisten vorgesehenen Aussparungen wird erreicht, daß die Klemmleiste in einfacher Weise an den gebogenen Formverlauf der Schiene anpaßbar ist.

Ein Ausführungsbeispiel der Erfindung ist in der Zeichnung dargestellt und wird im folgenden näher erläutert.

Es zeigt:
- Fig. 1: eine Teilseitenansicht eines Fahrzeuges mit einem Faltverdeck
- Fig. 2: eine Schnittansicht nach der Linie II-II der Fig. 1 in größerem Maßstab mit einer ersten Ausführungsform einer Verdeckbezugsbefestigung
- Fig. 3: eine Schnittansicht entsprechend Fig. 2 einer zweiten Ausführungsform einer Verdeckbezugsbefestigung
- Fig. 4: eine Ansicht in Pfeilrichtung R der Fig. 2 der Klemmleiste ohne den Dichtkörper
- Fig. 5: einen Schnitt nach der Linie V-V der Fig. 4 der Klemmleiste mit dem Dichtkörper in größerem Maßstab.

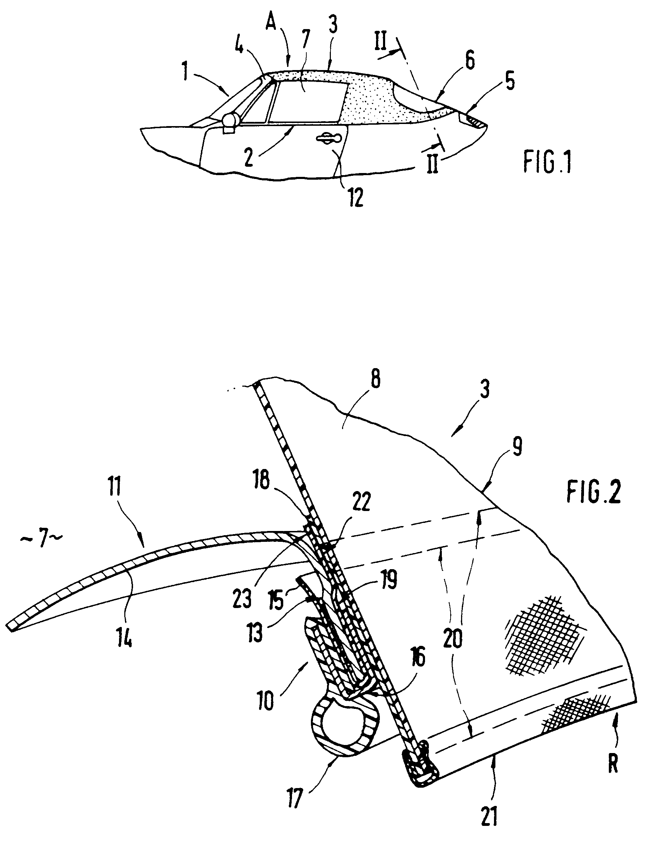

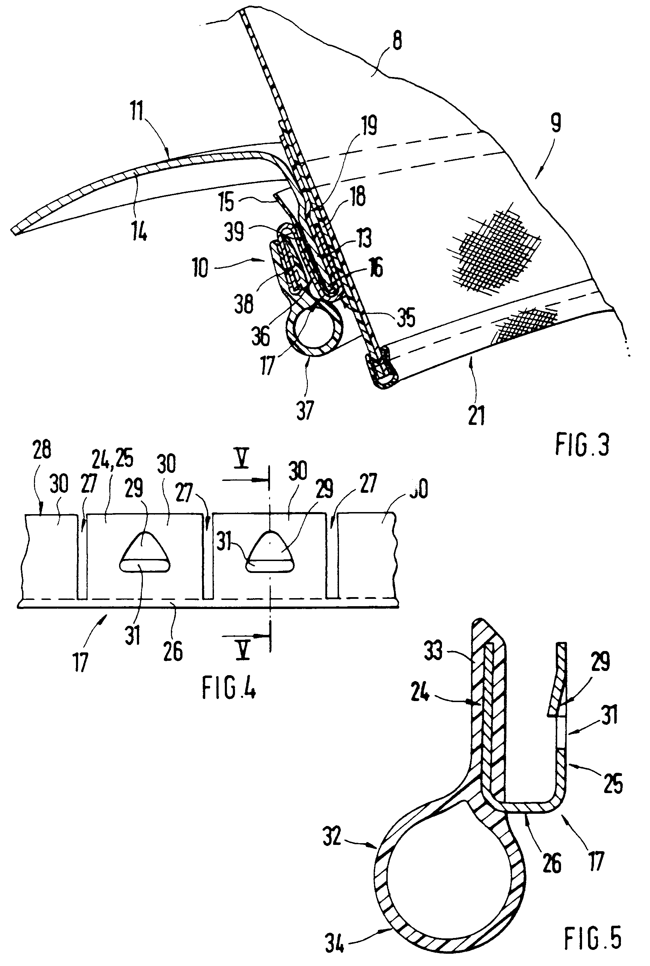

Fig. 1 zeigt einen Personenkraftwagen 1, der oberhalb einer Gürtellinie 2 ein Faltverdeck 3 aufweist, das sich in seiner Schließstellung A von einem Windschutzscheibenrahmen 4 bis zu einem Heckbereich 5 erstreckt und eine Heckscheibe 6 aufweist. Das Faltverdeck 3, das einen Fahrgastraum 7 nach oben hin verschließt, umfaßt ein nicht näher dargestelltes Verdeckgestänge und einen Verdeckbezug 8. Ein unterer Randbereich 9 des Verdeckbezuges 8 ist gemäß den Fig. 2 und 3 mittels einer Befestigungseinrichtung 10 an einer aufbauseitig fixierten Schiene 11 in Lage gehalten. Die Schiene 11 erstreckt sich etwa in Höhe der Gürtellinie 2 von einem hinteren Ende der Seitentür 12 der einen Fahrzeuglängsseite den Fahrgastraum 7 - in der Draufsicht gesehen - bogenförmig umgebend durchgehend bis zum hinteren Ende der Seitentür 12 der gegenüberliegenden Fahrzeuglängsseite.
Die Schiene 11 ist über nicht näher dargestellte Halteelemente am Aufbau in Lage gehalten. Es besteht jedoch auch die Möglichkeit, daß die Schiene 11 durch einen schwenkbar gelagerten Spannbügel oder Stoffhaltebügel gebildet wird.

Gemäß den Fig. 2 und 3 ist die Schiene 11 im Querschnitt gesehen etwa winkelförmig ausgebildet und umfaßt einen ersten, etwa parallel zum unteren Randbereich 9 des Verdeckbezuges 8 verlaufenden Schenkel 13, an den der Verdeckbezug 8 mittels der Befstigungseinrichtung 10 fixiert ist. Ferner ist an der Schiene 11 ein dem Fahrgastraum 7 zugekehrter zweiter Schenkel 14 vorgesehen, der als Abdeckung für eine nicht näher dargestellte Halterung für die Schiene 11 dient.
Die Befestigungseinrichtung 10 für den unteren Randbereich 9 des Verdeckbezuges 8 umfaßt ein am Verdeckbezug 8 vorgesehenes Zugband 15, das um das freie Ende 16 des ersten Schenkels 13 der Schiene 11 herumgeführt ist und vorzugsweise an beiden Seiten des Schenkels 13 anliegt.
Auf dieses Zugband 15 ist eine Klemmleiste 17 aufgeschoben, die das Zugband 15 beidseitig umgreift. Der Schenkel 13 weist im Bereich der aufgesetzten Klemmleiste 17 eine vom Verdeckbezug 8 weggerichtete Abstellung 19 auf.

Der untere Randbereich 9 des Verdeckbezuges 8 ist auf der dem Fahrgastraum 7 zugekehrten Seite mit einer Verstärkung 18 aus Verdeckstoff oder dgl. versehen. Die Verstärkung 18 ist mit dem Verdeckbezug 8 verklebt und zusätzlich bei 20 örtlich vernäht oder nur vernäht. Das aus Verdeckstoff oder dgl. gebildete Zugband 15 ist an der Innenseite der Verstärkung 18 angeordnet und an seinem, dem unteren Rand 21 abgekehrten Ende fest mit der Verstärkung 18 verbunden (vernäht und verklebt). Mit Ausnahme dieses Befestigungsabschnittes 22 ist das Zugband 15 jedoch frei beweglich gegenüber der Verstärkung 18 und dem Verdeckbezug 8. Im Anlieferungszustand erstreckt sich das freie Ende des Zugbandes 15 etwa bis zum unteren Rand 21 des Verdeckbezuges 8.

Der Befestigungsabschnitt 22 verläuft mit Abstand zum unteren Rand 21 des Verdeckbezuges 8.

Gemäß Fig. 2 ist der Befestigungsabschnitt 22 benachbart eines theoretischen Schnittpunktes 23 der beiden Schenkel 13, 14 der Schiene 11 vorgesehen. Die Klemmleiste 17 ist vorzugsweise aus nichtrostendem Edelstahl gefertigt. Es besteht jedoch auch die Möglichkeit, die Klemmleiste 17 aus einem geeigneten Kunststoff herzustellen.

Gemäß einer ersten Ausführungsform (Fig. 2, 4 und 5) ist die Klemmleiste 17 im Querschnitt gesehen etwa U-förmig profiliert und umfaßt zwei Haltestege 24, 25 zusammen, die über einen Verbindungssteg 26 miteinander verbunden sind. Die beiden Haltestege 24, 25 sind etwa parallel zueinander ausgerichtet. Es besteht auch die Möglichkeit, daß sich die Haltestege 24, 25 zu ihren freien Enden hin geringfügig verjüngen.

Die Klemmleiste 17 ist im Anlieferungszustand geradlinig ausgebildet und umfaßt einen durchgehenden schmalen Verbindungssteg 26. Die beiden Haltestege 24, 25 weisen in gleichbleibenden Abständen längliche Aussparungen 27 auf, die sich vom freien Ende 28 der Haftestege 24, 25 annähernd bis zum Verbindungssteg 26 erstrecken. Die Aussparungen 27 können jedoch auch eine geringere Tiefe aufweisen.
Durch diese Aussparungen 27 läßt sich die Klemmleiste 17 in einfacher Weise auch auf radienförmige oder gebogene Abschnitte der Schiene 11 montieren.

Zumindest an einem Haltesteg 24, 25 der Klemmleiste 17 sind abgestellte Federzungen 29 vorgesehen, die mit dem Zugband 15 bzw. dem ersten Schenkel 13 der Schiene 11 in Zugrichtung verkrallend zusammenwirken.
Die Federzungen 29 sind jeweils in einem mittleren Bereich der Quererstreckung von Wandabschnitten 30 der Klemmleiste 17 vorgesehen, wobei jeder Wandabschnitt 30 von zwei benachbarten Aussparungen 27 des Haltesteges 24, 25 begrenzt wird.

Gemäß den Fig. 4 und 5 sind die Federzungen 29 im Bereich von Ausnehmungen 31 der Wandabschnitte 30 vorgesehen. Die Federzungen 29 sind örtlich nach innen hin in Richtung Zugband 15 bzw. Schenkel 13 abgestellt.

Entsprechend Fig. 5 ist ein mit dem nicht näher dargestellten Fondrahmen zusammenwirkender Dichtkörper 32 einstückig mit der Klemmleiste 17 ausgebildet. Ein Haltesteg (z.B. 24) und ein Teilbereich des Verbindungssteges 26 sind in einen Fußabschnitt 33 des Dichtkörpers 32 eingebettet. An den Fußabschnitt 33 schließt sich ein vorstehender Schlauchprofilabschnitt 34 an, der unter Vorspannung am nicht näher dargestellten Fondrahmen anliegt.

Fig. 3 zeigt eine zweite Ausführungsform einer Befestigungseinrichtung 10. Diese unterscheidet sich von der ersten Ausführungsform dadurch, daß die Klemmleiste 17 im Querschnitt gesehen zwei mäanderförmig aneinandergesetzte Abschnitte 35, 36 umfaßt, wobei der Abschnitt 35 das Zugband 15 beidseitig anliegend umgibt und im wesentlichen der U-förmigen Klemmleiste 17 gemäß der ersten Ausführungsform entspricht.

Der zweite Abschnitt 36 nimmt einen separat hergestellten Dichtkörper 37 auf. Der Dichtkörper 37 ist entweder in die U-förmige Aufnahme des Abschnitts 36 eingesetzt oder auf einen Steg 38 des zweiten Abschnitts 36 aufgesteckt (Fig. 3).

Zur Vorfixierung des Zugbandes 15 am ersten Schenkel 13 der Schiene 11 kann ein doppelseitiges Klebeband 39 verwendet werden, das entweder am Zugband 15 oder am Schenkel 13 vormontiert ist (Fig. 3).

## Patentansprüche

1. Einrichtung zur Befestigung eines unteren Randbereiches eines Verdeckbezuges an einer - im Querschnitt gesehen - winkelförmigen Schiene, die an einen Fondrahmen des Kraftfahrzeuges befestigt ist und den Fahrgastraum - in der Draufsicht gesehen - bogenförmig umgibt, wobei an der Schiene ein erster, etwa parallel zum unteren Randbereich des Verdeckbezuges verlaufender Schenkel zur Halterung des unteren Randbereiches ausgebildet ist,
**dadurch gekennzeichnet**, daß
am unteren Randbereich (9) des Verdeckbezuges (8) ein um das freie Ende (16) des ersten Schenkels (13) der Schiene (11) herumgeführtes Zugband (15) vorgesehen ist, das vorzugsweise an beiden Seiten dieses Schenkels (13) anliegt und daß über das Zugband (15) bzw. den ersten Schenkel (13) eine Klemmleiste (17) aufgeschoben ist, die das Zugband (15) beidseitig umgreift.

2. Einrichtung nach Anspruch 1, **dadurch gekennzeichnet**, daß ein unterer Randbereich (9) des Verdeckbezuges (8) auf der einem Fahrgastraum (7) zugekehrten Seite bereichsweise mit einer Verstärkung (18) versehen ist, die fest mit dem darüberliegenden Verdeckbezug (8) verbunden ist.

3. Einrichtung nach den Ansprüchen 1 und 2, **dadurch gekennzeichnet**, daß das Zugband (15) an der Innenseite der Verstärkung (18) angeordnet und lediglich in einem Befestigungsabschnitt (22) fest mit der Verstärkung (18) bzw. dem Verdeckbezug (8) verbunden ist.

4. Einrichtung nach Anspruch 3, **dadurch gekennzeichnet**, daß der Befestigungsabschnitt (22) des Zugbandes (15) mit Abstand zum unteren Rand (21) des Verdeckbezuges (8) verläuft.

5. Einrichtung nach den Ansprüchen 3 und 4, **dadurch gekennzeichnet**, daß der Befestigungsabschnitt (22) benachbart eines theoretischen Schnittpunktes (23) der beiden Schenkel (13, 14) der Schiene (11) angeordnet ist.

6. Einrichtung nach Anspruch 1, **dadurch gekennzeichnet**, daß die Klemmleiste (17) aus nichtrostendem Edelstahl gefertigt ist.

7. Einrichtung nach den Ansprüchen 1 und 5, **dadurch gekennzeichnet**, daß die Klemmleiste (17) im Querschnitt gesehen etwa U-förmig profiliert ist, wobei zumindest an einem Haltesteg (24, 25) der Klemmleiste (17) örtlich abgestellte Federzungen (29) vorgesehen sind, die mit dem Zugband (15) bzw. dem ersten Schenkel (13) der Schiene (11) in Zugrichtung verkrallend zusammenwirken.

8. Einrichtung nach einem oder mehreren der vorangegangenen Ansprüche, **dadurch gekennzeichnet**, daß ein schmaler Verbindungssteg (26) zwischen den beiden Haltestegen (24, 25) durchgehend über die gesamte Längserstreckung der Klemmleiste (17) verläuft, wogegen beide Haltestege (24, 25) in definierten, gleichbleibenden Abständen Aussparungen (27) aufweisen, die sich vom freien Ende (28) der Haltestege (24, 25) bis annähernd zum Verbindungssteg (26) erstrecken.

9. Einrichtung nach den Ansprüchen 6 und 7, **dadurch gekennzeichnet**, daß im Bereich der zwischen zwei benachbarten Aussparungen (27) verbleibenden Wandabschnitte (30) der Haltestege (24, 25) die nach innen abgestellten Federzungen (29) vorgesehen sind.

10. Einrichtung nach Anspruch 1, **dadurch gekennzeichnet**, daß ein mit dem Fondrahmen zusammenwirkender Dichtkörper (32) einstückig mit der Klemmleiste (17) ausgebildet ist.

11. Einrichtung nach Anspruch 9, **dadurch gekennzeichnet**, daß ein Haltesteg (z.B. 24) und ein Teilbereich des Verbindungssteges (26) der Klemmleiste (17) in einen Fußabschnitt (33) des Dichtkörpers (32) eingebettet sind, wobei sich an den Fußabschnitt (33) ein vorstehender Schlauchprofilabschnitt (34) anschließt.

12. Einrichtung nach Anspruch 1, **dadurch gekennzeichnet**, daß die Klemmleiste (17) - im Querschnitt gesehen - zwei mäanderförmig aneinandergesetzte Abschnitte (35, 36) aufweist, wobei ein Abschnitt (35) das Zugband (15) beidseitig anliegend umgibt und daß der zweite Abschnitt (36) einen Dichtkörper (27) aufnimmt.

13. Einrichtung nach Anspruch 11, **dadurch gekennzeichnet**, daß der Dichtkörper (37) auf einen Steg (38) des zweiten Abschnitts (36) aufgesteckt ist.

## Claims

1. Means for fastening a bottom edge of a soft top to an angular rail, when viewed in cross-section, fastened to the rear frame of the motor vehicle and surrounding the passenger compartment in a curved manner, when seen in plan view, wherein a first leg extending substantially parallel to the lower edge of the soft top is constructed for supporting the lower edge, **characterised in that**
a tension member (15) extending around the free end (16) of the first leg (13) of the rail (11) is provided on the bottom edge (9) of the soft top (8) and preferably rests on both sides of the said leg (13), and a clamping strip (17) is slid over the tension member (15) and the first leg (13) and embraces both sides of the tension member (15).

2. Means according to Claim 1, **characterised in that** a bottom edge (9) of the sort top (8) is provided - on the side facing a passenger compartment (7) - with a reinforcer (18) rigidly connected over the area to the soft top (8) lying thereon.

3. Means according to Claims 1 and 2, **characterised in that** the tension member (15) is arranged on the inside of the reinforcer (18) and is connected only in a fastening section (22) rigidly to the reinforcer (18) and the soft top (8).

4. Means according to Claim 3, **characterised in that** the fastening section (22) of the tension member (15) is arranged at a distance from the bottom edge (21) of the soft top (8).

5. Means according to Claims 3 and 4, **characterised in that** the fastening section (22) is arranged adjacent a theoretical intersection (23) of the two legs (13, 14) of the rail (11).

6. Means according to Claim 1, **characterised in that** the clamping strip (17) is produced from stainless steel.

7. Means according to Claims 1 and 5, **characterised in that** the profile of the clamping strip (17) is substantially U-shaped, when viewed in cross-section, wherein locally positioned spring tongues (29) are provided at least on one locking cross-member (24, 25) of the clamping strip (17) and co-operate with the tension member (15) and the first leg (13) of the rail (11) respectively by catching thereon in the direction of travel.

8. Means according to one or more of the preceding claims, **characterised in that** a narrow connecting cross-member (26) extends between the two locking cross-members (24, 25) continuously along the entire length of the clamping strip (17), whereas the two locking cross-members (24, 25) have, at defined, uniform distances, recesses (27) extending from the free end (28) of the locking cross-members (24, 25) substantially up to the connecting cross-member (26).

9. Means according to Claims 6 and 7, **characterised in that** the inwardly positioned spring tongues (29) are provided in the area of the wall sections (30), remaining between two adjacent recesses (27), of the locking cross-members (24, 25).

10. Means according to Claim 1, **characterised in that** a sealing structure (32) co-operating with the rear frame is constructed integrally with the clamping strip (17).

11. Means according to Claim 9, **characterised in that** a locking cross-member (e.g. 24) and a partial area of the connecting cross-member (26) of the clamping strip (17) are embedded in a foot section (33) of the sealing structure (32), wherein a projecting tubular profile section (34) is connected to the foot section (33).

12. Means according to Claim 1, **characterised in that** the clamping strip (17), when viewed in cross-section, has two meander-shaped sections (35, 36) positioned together, wherein one section (35) surrounds and rests against the tension member (15) on both sides, and the second section (36) holds a sealing structure (27) [sic-37].

13. Means according to Claim 11 [sic-12], **characterised in that** the sealing structure (37) is mounted on a cross-member (38) of the second section (36).

## Revendications

1. Dispositif de fixation d'une zone de bordure inférieure d'un revêtement de capote sur un rail angulaire - vu en coupe transversale -, qui est fixé sur un cadre arrière du véhicule automobile et entoure en arc - vu de dessus - l'habitacle, une première branche, s'étendant à peu près parallèlement à la zone de bordure inférieure du revêtement de capote, étant formée sur le rail, pour la fixation de la zone de bordure inférieure,
caractérisé en ce que
sur la zone de bordure inférieure (9) du revêtement de capote (8) est prévue une bande de traction (15) passant autour de l'extrémité libre (16) de la première branche (13) du rail (11), bande de traction qui s'applique de préférence contre les deux côtés de cette branche (13) et an ce que sur la bande de traction (15) ou la première branche (13) est enfilée une baguette de serrage (17), qui entoure la bande de traction (15) des deux côtés.

2. Dispositif salon la revendication 1, caractérisé en ce qu'une zone de bordure inférieure (9) du revêtement de capote (8), est pourvue, sur un côté tourné vers l'habitacle (7), par endroits, d'un renfort (18) qui est solidaire du revêtement de capote (8) situé au-dessus.

3. Dispositif selon les revendications 1 et 2, caractérisé en ce que la bande de traction (15) est placée sur le côté intérieur du renfort (18) et est solidaire du renfort (18) ou du revêtement de capote (8), uniquement dans une portion de fixation (22).

4. Dispositif selon la revendication 3, caractérisé en ce que la portion de fixation (22) de la bande de traction (15) s'étend à distance du bord inférieur (21) du revêtement de capote (8).

5. Dispositif selon les revendications 3 et 4, caractérisé en ce que la portion de fixation (22) est placée à proximité d'un point d' intersection théorique (23) des deux branches (13, 14) du rail (11).

6. Dispositif selon la revendication 1, caractérisé en ce que la baguette de serrage (17) est en acier spécial inoxydable.

7. Dispositif salon les revendications 1 et 5, caractérisé en ce que la baguette de serrage (17), vue en coupe transversale, est profilée à peu près en U, sur au moins une nervure de maintien (24, 25) de la baguette de serrage (17) étant prévues des languettes de ressort (29) , localement déviées, qui coopèrent par accrochage dans la direction de traction, avec la bande de traction (15) ou la première branche (13) du rail (11).

8. Dispositif selon une ou plusieurs des revendications précédentes, caractérisé en ce qu'une étroite nervure de liaison (26) entra les deux nervures de maintien (24, 25) s'étend an continu sur toute l'extension longitudinale de la baguette de serrage (17), tandis que las deux nervures de maintien (24, 25) présentant à des distances constantes, définies, des découpes (27), qui s'étendent de l'extrémité libre (28) des nervures de maintien (24, 25) jusqu'approximativement à la nervure de liaison (26).

9. Dispositif selon las revendications 6 et 7, caractérisé en ce que dans la zone des portions de paroi (30), restant entra deux découpas (27) voisines, des nervures de maintien (24, 25), sont prévues les languettes de ressort (29), déviées vers l'intérieur.

10. Dispositif selon la revendication 1, caractérisé en ce qu'un corps d'étanchéité (32), coopérant avec le cadre arrière, est réalisé d'une seule pièce avec la baguette de serrage (17).

11. Dispositif selon la revendication 9, caractérisé en ce qu'une nervure de maintien (par exemple 24) et une zone partielle de la nervure de liaison (26) de la baguette de serrage (17) sont noyées dans une portion de pied (33) du corps d'étanchéité (32), une portion de profilé de tuyau (34) saillante se rattachant à la portion de pied (33).

12. Dispositif selon la revendication 1, caractérisé an ce que la baguette de serrage (17) - vue en coupe transversale - présente deux portions (35, 36) en méandres placées l'une contre l'autre, une portion (35) entourant la bande de traction (15) an s'appliquant des deux côtés et an ce que la deuxième portion (36) loge un corps d'étanchéité (27).

13. Dispositif selon la revendication 11, caractérisé en ce que la corps d'étanchéité (37) est placé sur une nervure (38) de la deuxième portion (36).
